(19) Europäisches Patentamt
European Patent Office
Office européen des brevets

(11) **EP 4 701 197 A1**

(12) **EUROPEAN PATENT APPLICATION**

(43) Date of publication:
25.02.2026 Bulletin 2026/09

(21) Application number: 25196664.4

(22) Date of filing: 19.08.2025

(51) International Patent Classification (IPC):
H04N 21/231 (2011.01)    H04L 41/046 (2022.01)
H04L 65/611 (2022.01)    H04L 67/568 (2022.01)
H04N 21/262 (2011.01)    H04N 21/433 (2011.01)
H04N 21/438 (2011.01)    H04N 21/482 (2011.01)
H04N 21/6405 (2011.01)    H04N 21/643 (2011.01)
H04N 21/845 (2011.01)    H04N 21/442 (2011.01)

(52) Cooperative Patent Classification (CPC):
H04N 21/6405; H04L 41/046; H04L 65/611;
H04L 67/568; H04N 21/23106; H04N 21/26258;
H04N 21/4331; H04N 21/44209; H04N 21/44227;
H04N 21/4424; H04N 21/4825; H04N 21/64322;
H04N 21/8456

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.08.2024 US 202463684666 P
19.08.2024 US 202463684743 P

(71) Applicant: ARRIS ENTERPRISES, LLC
Suwanee, GA 30024 (US)

(72) Inventors:
• RAMACHANDIRAN, Kanakendiran
Horsham, 19044 (US)
• CHANDERRAJU, Varma
Horsham, 19044 (US)
• JATTI, Vinod
Horsham, 19044 (US)

(74) Representative: Openshaw & Co.
8 Castle Street
Farnham, Surrey GU9 7HR (GB)

(54) **REDUNDANCY AND DISTRIBUTED CACHING IN MULTICAST ABR (MABR)**

(57) A gateway device operatively connected to a multicast server and at least one client player device, each client player device having a respective client agent, the gateway device comprising a gateway agent and a MABR master, the MABR master configured to receive a multicast stream from the multicast server and automatically select an agent from among the gateway agent and any respective agent of the at least one client player device, to cache respective segments of the multicast stream.

FIG. 1

EP 4 701 197 A1

**Description**

CROSS REFERENCE TO RELATED APPLICATIONS

This application claims the benefit of priority under 35 U.S.C. § 119(e) to prior filed U.S. Provisional Application No. 63/684,743 filed on August 19, 2024 and U.S. Provisional Application No. 63/684,666 filed on August 19, 2024, the contents of each of which are hereby incorporated by reference in their entirety.

BACKGROUND

The subject matter of this application relates to systems and methods of multicasting adaptive bitrate content.

Although Cable Television (CATV) networks originally delivered content to subscribers over large distances using an exclusively RF transmission system, modern CATV transmission systems have replaced much of the RF transmission path with a more effective optical network, creating a hybrid transmission system where cable content terminates as RF signals over coaxial cables, but is transmitted over the bulk of the distance between the content provider and the subscriber using optical signals. Specifically, CATV networks include a head end at the content provider for receiving signals representing many channels of content, multiplexing them, and distributing them along a fiber-optic network to one or more nodes, each proximate a group of subscribers. The node then de-multiplexes the received optical signal and converts it to an RF signal so that it can be received by viewers. The system in a head end that provides the video channels to a subscriber typically comprises a plurality of EdgeQAM units operating on different frequency bands that are combined and multiplexed before being output onto the HFC network.

Historically, the head end also included a separate Cable Modem Termination System (CMTS), which is used to provide high speed data services, such as video, cable Internet, Voice over Internet Protocol, etc. to cable subscribers. Typically, a CMTS will include both Ethernet interfaces (or other more traditional high-speed data interfaces) as well as RF interfaces so that traffic that is coming from the Internet can be routed (or bridged) through the Ethernet interface, through the CMTS, and then onto the optical RF interfaces that are connected to the cable company's hybrid fiber coax (HFC) system. Downstream traffic is delivered from the CMTS to a cable modem in a subscriber's home, while upstream traffic is delivered from a cable modem in a subscriber's home back to the CMTS. Many modern HFC CATV systems have combined the functionality of the CMTS with the video delivery system (EdgeQAM) in a single platform called the Converged Cable Access Platform (CCAP). Requirements for data throughput (or bandwidth) in these CATV networks are growing exponentially as customers demand more content, data services, etc., and in particular, to satisfy this demand, video content is often delivered as an Internet Protocol (IP) data service over a CATV network rather than a QAM or RF signal that is demodulated by a set top box.

More specifically, an IP video delivery network based on Adaptive Bit Rate (ABR) streaming can provide many advantages over traditional cable delivery systems, such as greater flexibility, reliability, lower integration costs, new services, and new features. ABR streaming is a technique for streaming multimedia across computer networks where the source content is encoded at multiple bit rates. Adaptive bitrate (ABR) streaming uses encoders or packagers to provide multiple different bitrates for the same multimedia content (resulting in different quality levels). ABR clients monitor the network and player.

ABR is typically delivered via unicast i.e., from a single source of the media content such as a server to the player device requesting the content. Unicast delivery, however uses bandwidth in an inefficient manner because multiple instances of the same content may be streamed separately to different devices that present that content.

Multicast delivery of ABR content, or Multicast Adaptive Bit Rate (MABR) makes more efficient use of bandwidth by sharing content streams among several receivers. Intermediate network elements (e.g., routers or switches) are now more closely involved in the service delivery such that some control and management functions are delegated from the source server. This control is supported by more extensive protocols devised for this type of application such as, e.g., Protocol Independent Multicast (PIM) and Internet Group Multicast Protocol (IGMP). When a receiver requests a given media item, the network router system finds an existing stream of that content already in the network and directs a copy of it to that receiver from a serving cable headend, a video head office or an appropriately proximal network node in an edge distribution network. The requesting receiver may be provided with the capability to join this existing stream under controlled conditions that do not adversely affect existing receivers. Any receiver in this group may also be provided with the ability to leave the stream, or pause its consumption, without affecting the others. Additionally, there may be an implementation where a video pipe delivering services to a premises is operative to deliver content to one or more progressive download clients of the premises that are designed to receive the video in bursts.

Multicast delivery of adaptive bitrate (MABR), however, also presents difficulties. While network bandwidth is used more efficiently, network resources must be devoted to storing copies of streamed ABR content that may be requested by another client. Also, MABR systems are configured for resiliency so that, if a multicast stream is interrupted, if a server goes offline, for example, the client devices switch to unicast to resume streaming, and this can overwhelm the network.

What is desired, therefore, are improved architectures, devices, and methods for Multicast ABR delivery.

BRIEF DESCRIPTION OF THE DRAWINGS

For a better understanding of the invention, and to show how the same may be carried into effect, reference will now be made, by way of example, to the accompanying drawings, in which:

FIG. 1 shows an improved caching system for MABR.
FIGS. 2-4 show an improved redundancy system for MABR.

DETAILED DESCRIPTION

As already noted, a cable television (CATV) system provides a variety of media content, such as video, data, voice, or high-speed Internet services to subscribers. The CATV provider typically delivers the media content from a head end to its subscriber's client devices over a transmission network such as a coaxial network, a fiber optic network, or a hybrid fiber/coax (HFC) network. Requirements for data throughput (or bandwidth) in these CATV networks are growing exponentially as customers demand more content, data services, etc.

Streaming multimedia over wired and/or wireless networks has become ubiquitous, being readily accessible through the Internet or other network connections such as 4G, Bluetooth, etc. Because any given multimedia content stream may be requested by any one of a variety of devices, such as desktop computers, laptops, cell phones, tablets and so forth, each with its own display capabilities and over network bandwidth of varying quality, adaptive bit rate protocols have been established by which a particular multimedia device may receive streamed content at a quality appropriate for that device and its current network connection quality. For example, an ABR system may provide an on-demand movie to an HD television with a broadband connection to the Internet at 1080p/4300kbps and 5.1 surround audio while simultaneously delivering the same movie at 480p/1050kbps and stereo audio to a cell phone connected to the Internet over a 4G service. Alternately, that same cell phone could change from 480p quality to 240p quality, and back again, as bandwidth changes as, say, a user moves among wireless networks of disparate quality.

Several ABR technologies/formats currently exist, such as HTTP Live Streaming (HLS), MPEG Dash, Adobe HLS, etc. Using HLS as an example, HLS transcodes a particular multimedia presentation into a set of different streams of varying quality (each called a "variant"), where each variant may have a number of components (video, audio, etc.). The presentation is packaged into a number of segments to be delivered and played sequentially by a multimedia player, where each segment is hosted at one or more unique Universal Resource Locators (URLs) and comprises a transport stream file, usually having a transport stream (.ts) file extension, although other file formats may be used, such as fragmented MPEG 4 or ISBMFF (ISO Base Media File Format0, etc. The multimedia content provider then makes the presentation available by publishing two types of manifests. A top-level master manifest uniquely identifies a set of available variant multimedia streams, each of a particular published quality including an overall stream bitrate and a set of codecs used for video and audio, such as AVC for MPEG 4 video and AAC for audio. Each of these multimedia streams is then given one or more separate media manifests, or playlists, each sequentially identifying the URLs of files that together contain a component or set of components of the media presentation. For example, one media manifest may specify URLs to a sequence of segments of the presentation that include the video presentation and its English audio while a second media manifest may specify URLs to a sequence of segments of the same presentation that only includes the Spanish audio for that presentation.

When a user selects a presentation for streaming to a device, that device retrieves the master playlist and selects the media stream having a quality that best matches the capabilities of the device as well as the bandwidth available to the device at that time. From that selection, the media manifest (playlist) associated with that stream is received by the player, which uses the playlist to sequentially retrieve and display the presentation segments from the URLs listed in the playlist. If conditions change, such that bandwidth drops below a level for acceptable playback of the content, the device can use the master playlist to select a lower quality multimedia stream, access the media manifest associated with that quality, and continue the presentation using the URLs from that manifest. Though HLS was used as an example to describe an adaptive bitrate system, other systems and formats operate in a similar fashion to deliver streaming content to a variety of devices, at selective bitrates and levels of quality resources to determine which bitrate to request when streaming content. The ABR client can switch to different bitrates depending on the state of these resources.

Also, as already noted, multicast adaptive bitrate (MABR) architectures have been developed to more efficiently use the bandwidth, or transmission path to a receiver (client device). Assume, for example, a MABR implementation for a gateway device, such as a cable modem, router, or set top box in a person's home that streams content received over a CATV network to a plurality of devices in that home, such as one or more televisions, computers, phones, etc. A MABR system efficiently uses bandwidth by multicasting the ABR content to the network terminal devices such as the that resides in the premises, which can then serve the multimedia player devices within the customer premises using the local cache on the gateway device. This can result in significant bandwidth savings. Whenever a player requests the MABR client for a media segment, the MABR client residing on the network terminal device (gateway) first checks if content is available in its local multicast cache (obtained over multicast) and delivers it if it's available. If the content is not available in its local multicast cache, the MABR client will fetch the content from the upstream CDN via unicast and deliver it to the player.

However, the MABR client running in the CPE gateway device is required to cache the streams watched by different in-home devices. The memory requirement for caching in the gateway grows significantly in many situations e.g., playback of non-overlapping streams, playing high-definition streams such as 4K, time-shifted playback, personalized (targeted) ads, etc.

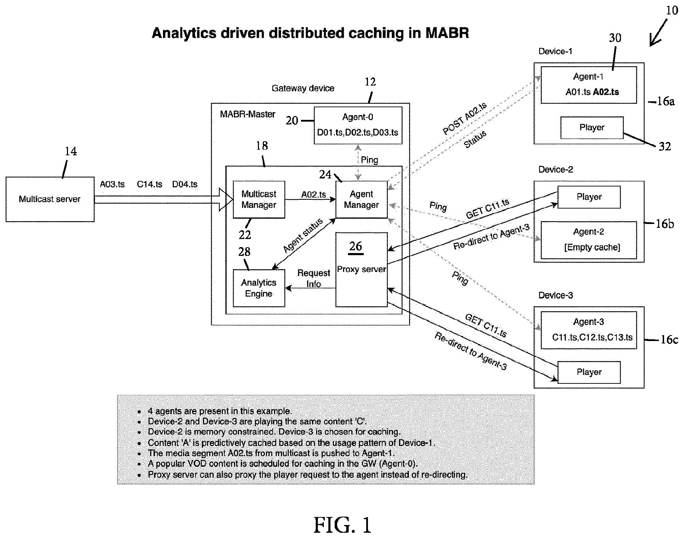

FIG. 1 shows a novel system that distributes the cache storage among the in-home devices, such as the player devices, and where the decision to select a particular device for storage of a particular segment or series of segments is made by an analytical engine. Specifically, FIG. 1 shows a system 10 comprising a gateway device 12 connected to, and configured to receive a multicast stream from, a multicast server 14. The gateway device 12 is also connected to a plurality of client devices 16a, 16b, 16c, etc., which present the multicast stream to users. Each client device 16a, 16b, 16c includes a client agent 30 and a player 32.

The gateway device 12 may in turn comprise a multicast master 18 that handles multicast reception and a gateway agent 12. The gateway agent 12 runs in the gateway and contains a simple HTTP server and in-memory cache to store media segments. Also, unlike the agents 30 within each client device, which communicate via HTTP(S), the agent that runs in the gateway master may use optionally us a direct API call instead of HTTP(S).

The multicast master 18 comprises a multicast manager 22, an agent manager 24, a proxy server 26, and an analytics engine 28. The agent manager 24 handles co-ordination with MABR-agents 12, 30 and pings them periodically to get their active, cache and resource status. The agent manager 24 also communicates with analytics engine 28 to select the preferable agent 12, 30 for storing the media segment received over multicast. The proxy server 26 handles player requests. It is configured to proxy/re-directs a player's media segment requests to a MABR-agent that caches the requested segment when necessary i.e., when that player is itself not caching the media segment.

The analytics engine 28 runs inside the MABR master 12, and operates to select agent for storing the media segments received over the multicast. The analytics engine may use the following criteria, which is not an exhaustive list:

-    Available memory of the agent.

-    CPU usage of the agent.
-    Health of the agent.
-    Content affinity.
-    Viewing pattern of the device.

Memory, CPU usage and the health of the agent can be derived from the ping status response. Content affinity means a preference for the agent in the same device as the player. The viewing pattern of the device can be derived from the player requests to the proxy server 26. The analytics engine is continuously fed with the above information from the ping response of the agents and the request for a media segment from a particular device for playback.

The operation of the multicast flow in the system shown in FIG. 1 is as follows. With respect to the multicast master 12, multicast reception is initiated by this device. Upon reception of a new media segment, the analytics engine 28 decides which agent 12, 30 can be used for storage. It then sends a POST request to the selected agent along with an Expiry HTTP header for the relevant media segment. The selected agent stores this segment in its cache along with the Expiry value. Expired segments will be removed from the cache. The POST response of the selected agent will be its status (as is also true for an agent's ping response as described earlier) The MABR master 12 maintains the mapping of agent->media segments. With respect to flows by the player 32, the player's requests for a stream is forwarded to the proxy server 26 of the MABR master 12. The MABR master 12 looks up and finds the agent that contains the requested segment, and the proxy server 26 then proxies/re-directs the request to the requesting agent 30.

Thus, according to the example shown in the system shown in FIG. 1, there are four agents - one in the gateway device and another in each of the client devices. Assume, for example, that the players 32 of client devices 16b and 16c are presenting the same content, referred to as "content C." Also assume that the client device 16b is memory constrained; this leads the analytics engine to select client device 16c as the host to cache the segments of content C. Clien device 16a may request and receive "content A," and the analytics engine 28 may therefore select this device to cache segments of that content predictively. In addition, the multicast manager 12 may request, and proactively store a scheduled VOD title having segments of content D on the agent 20 of the gateway device 12. In this manner, the system of FIG. 1 may distribute the cache of three different content streams among the storage of all devices, which more efficiently uses the resources of that system.

Also as previously noted, for multicast resiliency, many instances of multicast server are configured to multicast the same MABR channel. If any of the multicast servers goes offline, or there are other issues with the streams, the MABR clients may cause the MABR clients to flood the network with unicast requests.

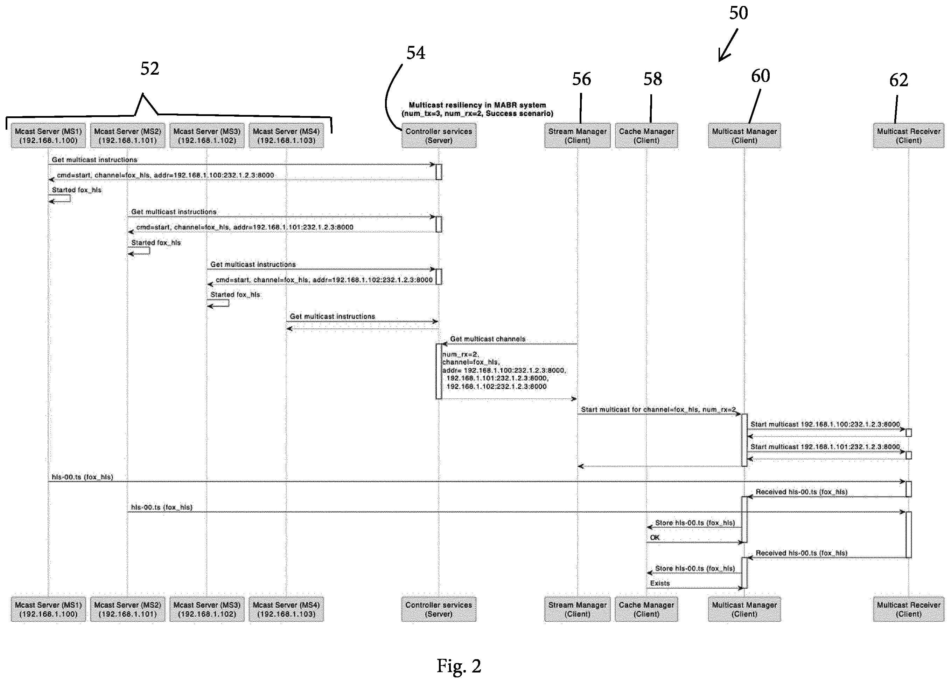

Accordingly, FIGS 2-4 show a second embodiment of the present disclosure. Specifically, these figures show a system 50 comprising a plurality of multicast servers 52 that provide redundant delivery of a requested multicast, e.g., multicast servers 1 through 4, as shown. Also, on the server side, the system 50 includes a controller 54, which may be remote from, or co-located with any one or more of the multicast servers 52. On the client side, the system 50 includes a stream manager 56, a cache manager 58, a multicast manager 60, and one or more multicast receivers 62. Each of these client devices may be distributed among one or more client devices i.e., the stream manager, cache manager 58 and multicast manager 60 may in some embodiments be located in a gateway device with the multicast receiver(s) 62 located in respective playback devices.

FIG. 2 shows the data flow that occurs in the system 50 when there is no fault with a multicast server. Specifically, assume that the channel fox_hls is multicast with a configurable or selectable number of transmitters, in this example three (num _tx=3). The count of multicast servers is preferably selected based on different physical locations and the optimum network path that could serve a particular zone of MABR clients. In other words, though there are four multicast servers depicted, for a particular multicast, not all servers need to be transmitting, The multicast servers 52 periodically requests multicast instructions from, controller 54 to identify which MABR channel to start/stop. As just stated, in this example, multicast servers MS1 (192.168.1.100), MS2 (192.168.1.101) and MS3 (192.168.1.102) are selected for multicasting the channel fox_hls. MS4 (192.168.1.103) is currently not used to multicast this channel.

The MABR client (e.g., stream manager 56) periodically requests controller services to get the configuration related to multicast channels, and in this example, the number of receivers (num_rx value of 2) and the SSM address of channel fox_hls from MS1, MS2 and MS3 are returned in that order. The MABR client (E.G., multicast manager 60) starts reception of this number of multicast streams of the fox_his. (Two streams 2 should be practically sufficient for most deployments). The multicast streams that belong to the first two SSM address (from MS1 and MS2) are started for reception. The media segment hls-00.ts from MS1 is received by receiver 62 and sent for storage in the cache by cache manger 58. The same media segment hls-00.ts from MS2 that came LATER is ignored. Those of ordinary skill in the art will appreciate that SSM (Source Specific Multicast) address is used in the example. It is also possible to use ASM. (Any Source Multicast) address. Also, the num_rx value is shown as a global parameter, but it can also be used on a per MABR-channel basis.

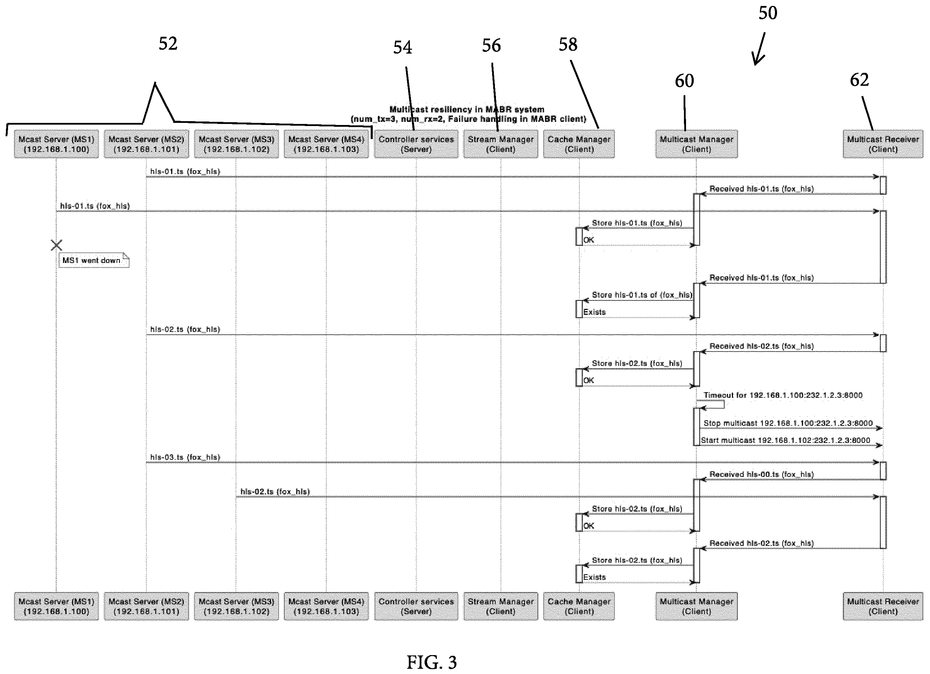

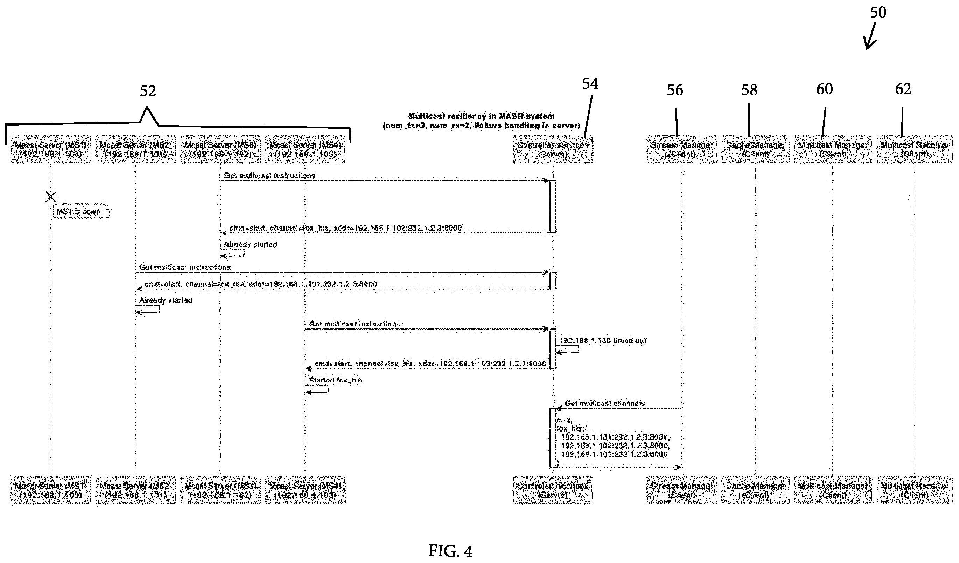

FIGS. 3 and 4 shows the data flows from the client-side and server side, respectively, when there is a fault in a multicast server. In this example, MS1 goes offline after transmitting the media segment hls-01.ts. The Multicast manager 56 of the MABR client detects that no media segment arrived from MS1 for a specific period i.e., the stream of MS1 has stopped. The next stream in the list of SSM addresses of channel fox_hls sent by controller 54 earlier is started, which in this example is from MS3. The client then receives media segments from both MS2 and MS3. Note that it is better if the logic of choosing the streams for reception is deterministic among the MABR clients as it would result in bandwidth savings. For instance, in this example, all the clients initially start the first num_rx streams in the list of SSM addresses sent for the channel. During a failure, the next one in the list is started.

All multicast servers 52 periodically request instructions from controller 54 for the multicast instructions. This request can also be used as an hear-beat message by the controller services to determine if a particular multicast server is still up. MS1 is already down and hence it would not send the request to the controller services while MS2 and MS3 would be still sending the requests. The controller 54 may be configured with a timeout parameter and if a multicast server is not sending a request to it for more than that duration, it can treat that multicast server as offline/went down. MS4 is selected for multicasting channel fox_hls to maintain the number of multicast streams to 3 (value of num_tx). In the list of SSM address sent back to the MABR client for channel fox_his, MS1 is removed and the SSM address of the new stream from MS4 is added.

If the MABR client has information about the maximum segment duration (Maxseg) and the maximum expected/estimated network latency (Maxlatency), then the timeout value can be calculated as:

$$\text{Timeout} = N * (\text{Maxseg} + \text{Maxlatency})$$

where N is the number of segments to wait. N >= 1. If N=1, the timeout happens if one media segment has not arrived on time. If the client does not have any information about the segment duration, it can statistically compute the timeout using the past arrival intervals of the media segments. One possible approach is to use a factor of largest arrival interval in the past X duration.

Those of ordinary skill in the art will appreciate that the analytics engine 28, shown in FIG. 1 as being located in a gateway device, may be included in the server 14 and provided as a service to the gateway device 12.

It will be appreciated that the invention is not restricted to the particular embodiment that has been described, and that variations may be made therein without departing from the scope of the invention as defined in the appended claims, as interpreted in accordance with principles of prevailing law, including the doctrine of equivalents or any other principle that enlarges the enforceable scope of a claim beyond its literal scope. Unless the context indicates otherwise, a reference in a claim to the number of instances of an element, be it a reference to one instance or more than one instance, requires at least the stated number of instances of the element but is not intended to exclude from the scope of the claim a structure or method having more instances of that element than stated. The word "comprise" or a derivative thereof, when used in a claim, is used in a nonexclusive sense that is not intended to exclude the presence of other elements or steps in a claimed structure or method.

**Claims**

1. A device operatively connected to at least one client player device and associated with a gateway device comprising a gateway agent and a MABR master, , each client player device having a respective client agent, the device configured to receive a multicast stream from the multicast server and automatically select an agent from among the gateway agent and any respective agent of the at least one client player device, to cache respective segments of the multicast stream.

2. The device of claim 1 including an analytics engine that automatically selects an agent to cache respective segments of the multicast stream using information from the client player devices.

3. The device of claim 2 where the information includes at least one of:

   - Available memory of the agent;
   - CPU usage of the agent;
   - Health of the agent;
   - Content affinity; and
   - Viewing pattern of the device.

4. The device of any one of the preceding claims including a proxy server that receives segment requests from the at least one player device and responds with an identification of the agent caching the requested segment.

5. The device of any one of the preceding claims including an agent manager that periodically communicates with the gateway agent and the respective client agents to retrieve status information.

6. The device of claim 5 where the analytics engine uses the status information to automatically select an agent to cache respective segments of the multicast stream.

7. A method for delivering a multicast of adaptive bitrate content to a plurality of client devices through a gateway device, the method comprising:

   receiving a sequence of adaptive bitrate content segments;
   automatically selecting a respective one of a plurality of agents to cache each respective one of the segments, each respective agent associated with the gateway device or a client device.

8. The method of claim 7 including receiving a request for a cached segment from one of the plurality of client devices, and determining which client device caches the segment.

9. The method of any one of claims 7-8 where automatic selection is based on at least one of:

   - Available memory of the agent;
   - CPU usage of the agent;
   - Health of the agent;
   - Content affinity; and
   - Viewing pattern of the device.

10. The method of any one of claims 7-9 including periodically communicating with the respective client agents to retrieve status information used for determining which client device caches the segment.

11. A controller operatively connected to a plurality of multicast servers and a client device receiving a multicast from the multicast servers, the controller operable to:

   select, at a first time, a subset of the plurality of multicast servers to deliver duplicate copies of the multicast to the client device; and
   select at a second time, a different subset of the plurality of multicast servers to deliver duplicate copies of the multicast to the client device, the different subset selected based on receipt of information that one server from among the first subset interrupted its delivery of the multicast to the client device.

12. The controller of claim 11 where the information was received from the client device.

13. The controller of claim 11 where the information was received from the first subset of the plurality of multicast servers.

14. The controller of any one of claims 11-13 where the second subset includes a multicast server not in the first subset.

15. The controller of any one of claims 11-14 configured to provide the client device with a network address of the multicast servers comprising each of the first subset and the second subset.

**Analytics driven distributed caching in MABR**

FIG. 1

Fig. 2

Multicast resiliency in MABR system
(num_tx=3, num_rx=2, Success scenario)

Mcast Server (MS1) (192.168.1.100)
Mcast Server (MS2) (192.168.1.101)
Mcast Server (MS3) (192.168.1.102)
Mcast Server (MS4) (192.168.1.103)
Controller services (Server)
Stream Manager (Client)
Cache Manager (Client)
Multicast Manager (Client)
Multicast Receiver (Client)

52
54
56
58
60
62
50

Get multicast instructions
cmd=start, channel=fox_hls, addr=192.168.1.100:232.1.2.3:8000
Started fox_hls

Get multicast instructions
cmd=start, channel=fox_hls, addr=192.168.1.101:232.1.2.3:8000
Started fox_hls

Get multicast instructions
cmd=start, channel=fox_hls, addr=192.168.1.102:232.1.2.3:8000
Started fox_hls

Get multicast instructions

Get multicast channels
num_rx=2,
channel=fox_hls,
addr=192.168.1.100:232.1.2.3:8000,
192.168.1.101:232.1.2.3:8000,
192.168.1.102:232.1.2.3:8000

Start multicast for channel=fox_hls, num_rx=2

Start multicast 192.168.1.100:232.1.2.3:8000
Start multicast 192.168.1.101:232.1.2.3:8000

hls-00.ts (fox_hls)
hls-00.ts (fox_hls)

Received hls-00.ts (fox_hls)
Received hls-00.ts (fox_hls)

Store hls-00.ts (fox_hls)
OK
Store hls-00.ts (fox_hls)
Exists

FIG. 3

50

62 — Multicast Receiver (Client)

60 — Multicast Manager (Client)

58 — Cache Manager (Client)

56 — Stream Manager (Client)

54 — Controller services (Server)

**Multicast resiliency in MABR system**
**(num_tx=3, num_rx=2, Failure handling in server)**

52 — Mcast Server (MS1) (192.168.1.100)
Mcast Server (MS2) (192.168.1.101)
Mcast Server (MS3) (192.168.1.102)
Mcast Server (MS4) (192.168.1.103)

MS1 is down

Get multicast instructions

cmd=start, channel=fox_hls, addr=192.168.1.102:232.1.2.3:8000

Already started

Get multicast instructions

cmd=start, channel=fox_hls, addr=192.168.1.101:232.1.2.3:8000

Already started

Get multicast instructions

cmd=start, channel=fox_hls, addr=192.168.1.103:232.1.2.3:8000

Started fox_hls

192.168.1.100 timed out

Get multicast channels

n=2,
fox_hls:{
192.168.1.101:232.1.2.3:8000,
192.168.1.102:232.1.2.3:8000,
192.168.1.103:232.1.2.3:8000
}

Controller services (Server)

Stream Manager (Client)

Cache Manager (Client)

Multicast Manager (Client)

Multicast Receiver (Client)

**FIG. 4**

Europäisches
Patentamt

European
Patent Office

Office européen
des brevets

# EUROPEAN SEARCH REPORT

Application Number

EP 25 19 6664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/195450 A1 (SU CHI-JIUN [US] ET AL) 6 July 2017 (2017-07-06) <br> * abstract * <br> * paragraph [0029] - paragraph [0031] * <br> * paragraph [0044] - paragraph [0049] * <br> * figures 1,3 * <br> ----- | 1-10 | INV. <br> H04N21/231 <br> H04L41/046 <br> H04L65/611 <br> H04L67/568 <br> H04N21/262 <br> H04N21/433 |
| Y | US 2017/041682 A1 (BONTA JEFFREY D [US] ET AL) 9 February 2017 (2017-02-09) <br> * abstract * <br> * paragraph [0012] * <br> * paragraph [0045] - paragraph [0051] * <br> * paragraph [0072] * <br> * paragraph [0082] - paragraph [0085] * <br> * paragraph [0106] * <br> * paragraph [0124] - paragraph [0154] * <br> * figures 2,7 * <br> ----- | 1-10 | H04N21/438 <br> H04N21/482 <br> H04N21/6405 <br> H04N21/643 <br> H04N21/845 <br> H04N21/442 |
| A | US 2017/188054 A1 (MA KEVIN J [US] ET AL) 29 June 2017 (2017-06-29) <br> * abstract * <br> * paragraph [0007] - paragraph [0010] * <br> * paragraph [0031] - paragraph [0037] * <br> * paragraph [0039] - paragraph [0042] * <br> * paragraph [0045] - paragraph [0046] * <br> * paragraph [0062] * <br> * figures 8,9,10 * <br> ----- <br> -/-- | 1-10 | |

TECHNICAL FIELDS
SEARCHED      (IPC)

H04N
H04L

The present search report has been drawn up for all claims

| Place of search | Date of completion of the search | Examiner |
|---|---|---|
| The Hague | 10 October 2025 | Fantini, Federico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

      .......................................................................................
& : member of the same patent family, corresponding
    document

EPO FORM 1503 03.82 (P04C01)

page 1 of 4

# EUROPEAN SEARCH REPORT

**Application Number**

EP 25 19 6664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 089 103 B1 (PARULKAR ISHWARDUTT [US] ET AL) 10 August 2021 (2021-08-10) <br> * abstract * <br> * column 2, line 64 - column 3, line 25 * <br> * column 4, line 61 - line 67 * <br> * column 5, line 50 - column 6, line 36 * <br> * column 7, line 5 - line 41 * <br> * column 8, line 17 - line 61 * <br> * column 12, line 8 - line 23 * <br> * column 13, line 44 - line 52 * <br> * column 14, line 48 - column 15, line 10 * <br> * column 16, line 18 - line 24 * <br> * column 19, line 54 - column 20, line 13 * <br> * column 21, line 40 - line 43 * <br> * figures 3,6,7 * | 1-10 | |
| A | US 2016/344833 A1 (HÅKANSSON STEFAN [SE] ET AL) 24 November 2016 (2016-11-24) <br> * abstract * <br> * paragraph [0004] - paragraph [0009] * <br> * paragraph [0023] - paragraph [0027] * <br> * paragraph [0098] - paragraph [0099] * <br> * paragraph [0108] - paragraph [0112] * <br> * paragraph [0118] - paragraph [0120] * <br> * figures 1,4 * | 1-10 | TECHNICAL FIELDS SEARCHED (IPC) |

-/--

The present search report has been drawn up for all claims

| Place of search | Date of completion of the search | Examiner |
|---|---|---|
| The Hague | 10 October 2025 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 19 6664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RICHARD BRADBURY BBC: "TM5763r17 TM-MCAST0025r28 DVB-MABR Phase 2 Technical Specification editor's draft V1.1.22", DVB, DIGITAL VIDEO BROADCASTING, C/O EBU - 17A ANCIENNE ROUTE - CH-1218 GRAND SACONNEX, GENEVA - SWITZERLAND , no. 17 9 August 2024 (2024-08-09), XP017867342, Retrieved from the Internet: URL:https://member.dvb.org/wg/TM/documentR evision/download/50707 TM5763r17 TM-MCAST0025r28 DVB-MABR Phase 2 Technical Specification editor's draft V1.1.22.zip TM5763r17 TM-MCAST0025r28 DVB-MABR Phase 2 Technical Specification editor's draft V1.1.22cl.docx [retrieved on 2024-08-09] * page 19, paragraph 4 * * page 23, paragraph 5.3.2 - page 24, paragraph 5.3.3.0 * * page 24, paragraph 5.3.5.0 - page 26, paragraph 5.3.8.0 * * page 27, paragraph 5.3.8.4 - paragraph 5.3.9 * * page 29, paragraph 6.2 * * page 43, paragraph 8.3.5 - page 44, paragraph 8.4.1.0 * * page 92, paragraph 11.1.2.5 - page 94 * * figures 5.2-1,6.2-1 * ----- -/-- | 1-10 | |
| | | | TECHNICAL FIELDS SEARCHED (IPC) |

The present search report has been drawn up for all claims

| Place of search | Date of completion of the search | Examiner |
|---|---|---|
| The Hague | 10 October 2025 | Fantini, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................................
& : member of the same patent family, corresponding
document

EPO FORM 1503 03.82 (P04C01)

page 3 of 4

**EUROPEAN SEARCH REPORT**

Application Number

EP 25 19 6664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FARSHAD ARSHAM ET AL: "Adaptive media streaming over IP multicast (mABR) a data analytic evaluation", PROCEEDINGS OF THE 5TH INTERNATIONAL WORKSHOP ON P4 IN EUROPE, ACMPUB27, NEW YORK, NY, USA, 9 December 2022 (2022-12-09), pages 14-20, XP058972028, DOI: 10.1145/3565476.3569098 ISBN: 978-1-4503-9936-4 * abstract * * page 14, column 2 - page 15, column 1 * * page 17, column 1 - column 2 * ----- | 1-10 | |

TECHNICAL FIELDS SEARCHED (IPC)

The present search report has been drawn up for all claims

| Place of search | Date of completion of the search | Examiner |
|---|---|---|
| The Hague | 10 October 2025 | Fantini, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 25 19 6664

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

Application Number

EP 25 19 6664

The Search Division considers that the present European patent application does not comply with the requirements of unity of invention and relates to several inventions or groups of inventions, namely:

1. claims: 1-10

   Analytics driven distributed caching in MABR system
   ---

2. claims: 11-15

   Multicast resiliency in MABR system
   ---

## ANNEX TO THE EUROPEAN SEARCH REPORT
## ON EUROPEAN PATENT APPLICATION NO.

EP 25 19 6664

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | | Publication date | Patent family member(s) | | Publication date |
|---|---|---|---|---|---|
| US 2017195450 | A1 | 06-07-2017 | CA | 3010303 A1 | 06-07-2017 |
| | | | EP | 3398333 A1 | 07-11-2018 |
| | | | ES | 2860943 T3 | 05-10-2021 |
| | | | US | 2017195450 A1 | 06-07-2017 |
| | | | WO | 2017117589 A1 | 06-07-2017 |
| US 2017041682 | A1 | 09-02-2017 | EP | 2647212 A1 | 09-10-2013 |
| | | | EP | 3962092 A1 | 02-03-2022 |
| | | | US | 2012144445 A1 | 07-06-2012 |
| | | | US | 2017041682 A1 | 09-02-2017 |
| | | | WO | 2012074874 A1 | 07-06-2012 |
| US 2017188054 | A1 | 29-06-2017 | EP | 3398314 A1 | 07-11-2018 |
| | | | US | 2017188054 A1 | 29-06-2017 |
| | | | WO | 2017115232 A1 | 06-07-2017 |
| US 11089103 | B1 | 10-08-2021 | NONE | | |
| US 2016344833 | A1 | 24-11-2016 | US | 2016344833 A1 | 24-11-2016 |
| | | | WO | 2016099356 A1 | 23-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63684743
- US 63684666